# EUROPEAN PATENT APPLICATION

(11) **EP 4 796 249 A1**
(43) Date of publication of application: **26.08.2026**
(21) Application number: 24879637.7
(22) Date of filing: 09.10.2024
(51) Int. Cl.: B23G 5/18, B23C 5/10, B23C 5/16

(54) **THREADING CUTTER**

(30) Priority: 19.10.2023 JP 2023180421
(71) Applicant: MOLDINO Tool Engineering, Ltd., Tokyo 130-0026 (JP)
(72) Inventor: IHARADA Yuki, Yasu-shi, Shiga 520-2323 (JP)
(74) Representative: Hoffmann Eitle
(86) International application number: PCT/JP2024/036131
(87) International publication number: WO 2025/084212

(57) **Abstract**

Provided is a threading cutter (1) including a cutter body (2) rotating around an axis and a cutting edge portion (3). The cutting edge portion (3) has a plurality of threading edges (6) protruding radially outward on an outer peripheral surface of the cutter body (2). The plurality of threading edges (6) are arranged side by side in a circumferential direction of the cutter body (2) and are aligned in an axial direction. When a crest flat width of the threading edge (6) is indicated by W and a thread height of the threading edge (6) is indicated by H, a relationship of 3%≤W/H≤10% is satisfied, and when a rake angle of the threading edge (6) is indicated by θ, a relationship of -20°≤θ≤-5° is satisfied.

## Description

### TECHNICAL FIELD

The present invention relates to a threading cutter.

Priority is claimed on Japanese Patent Application No. 2023-180421, filed on October 19, 2023, the content of which is incorporated herein by reference.

### BACKGROUND ART

As a conventional threading cutter, Patent Document 1 below discloses a threading cutter in which a plurality of cutting edges are arranged in a plurality of rows in a circumferential direction of a cutter body and also in an axial direction of the cutter body.

### Citation List

### Patent Document

Patent Document 1: Japanese Patent No. 7006276 (B)

### SUMMARY OF INVENTION

### Technical Problem

According to the threading cutter described in Patent Document 1, a female thread having a predetermined pitch can be formed by a plurality of rows of cutting edges arranged along the axial direction of the cutter body. Incidentally, in the case of this threading cutter, the pitch of the formed female thread is determined uniformly according to the pitch of the plurality of rows of cutting edges. Therefore, when forming a plurality of types of female threads having different pitches, it is necessary to prepare a plurality of types of threading cutters having cutting edges with different pitches corresponding to the plurality of types of female threads.

Therefore, a threading cutter with only one row of cutting edges in the axial direction of the cutter body has been considered. In this threading cutter, female threads with a plurality of pitches can be formed by changing the machining conditions. Incidentally, since there is only one row of cutting edges in the axial direction of the cutter body, the threading cutter will no longer be able to continue forming female threads if the cutting edge becomes unusable due to chipping or wear.

One aspect of the present invention has been made to solve the above-described problems and an object thereof is to provide a threading cutter capable of stably forming female threads having various specifications over a long period of time.

### Solution to Problem

(1) A threading cutter according to one aspect of the present invention includes:
   a cutter body which rotates around an axis; and a cutting edge portion which is formed at a tip of the cutter body, wherein the cutting edge portion has a plurality of threading edges which protrude radially outward on an outer peripheral surface of the cutter body, wherein the plurality of threading edges are arranged side by side in a circumferential direction of the cutter body and are aligned in an axial direction, wherein in a case where a crest flat width of the threading edge is indicated by W and a thread height of the threading edge is indicated by H, a relationship of 3%≤W/H≤10% is satisfied, and
   wherein in a case where a rake angle of the threading edge is indicated by θ, a relationship of -20°≤θ≤-5° is satisfied.
   **In** the threading cutter according to one aspect of the present invention, the plurality of threading edges are arranged side by side in the circumferential direction of the cutter body at the same axial position. Further, a relationship of 3%≤W/H≤10% and further a relationship of 5%W/H≤10% are satisfied, and compared to the conventional threading cutters, the crest flat width W of the cutting edge is relatively narrow and the thread height H is relatively high. Therefore, the threading cutter according to one aspect of the present invention can form female threads with a wide range of pitches from female threads with a small root width and shallow root depth to female threads with a large root width and deep root depth by appropriately adjusting the machining conditions. Further, when the crest flat width W is relatively narrow and the thread height H is relatively high, there is a concern that the durability of the cutting edge may decrease. However, the load on the threading edge can be reduced and durability can be ensured by setting the rake angle θ of the threading edge to a negative angle of -20°≤θ≤-5°. The reason why the above numerical range is preferable will be described later.
(2) In (1), a base material of the cutting edge portion may be a WC-Co cemented carbide, a Co content of the WC-Co cemented carbide may be 5 to 10 mass%, and a hardness of the WC-Co cemented carbide may be HRA93.5 to 94.5.
(3) In (1) or (2), the cutting edge portion may have an AlCrN-based hard coating.
(4) In (1) to (3), the threading cutter may have a shank portion provided on a rear end side of the cutting edge portion in the cutter body to be integrated with the cutting edge portion, and the threading cutter may further include a protrusion which protrudes radially outward from an outer surface of the shank portion.
(5) In (4), the shank portion may have a gripping portion which is a chucking portion on a rear end side of a tool and a neck portion which is provided between the cutting edge portion and the gripping portion to have a diameter smaller than or equal to a diameter of the gripping portion, and a clearance h between an outer surface of the protrusion and the neck portion with respect to the thread height H may satisfy 5%h/H≤20%.

### Advantageous Effects of Invention

According to one aspect of the present invention, it is possible to provide a threading cutter capable of stably forming female threads having various specifications over a long period of time.

### BRIEF DESCRIPTION OF DRAWINGS

[FIG. 1] A side view of a threading cutter of an embodiment.
[FIG. 2] An enlarged view of a cutting edge portion illustrated in Figure 1.
[FIG. 3] A plan view of the threading cutter of Figure 1.
[FIG. 4A] An observation photograph of a cutting edge portion 3 after cutting as viewed from the direction A of Figure 2 in Example 3.
[FIG. 4B] An observation photograph of the cutting edge portion 3 after cutting as viewed from the direction B of Figure 3 in Example 3.
[FIG. 5A] An observation photograph of the cutting edge portion 3 after cutting as viewed from the direction A of Figure 2 in Comparative Example 6.
[FIG. 5B] An observation photograph of the cutting edge portion 3 after cutting as viewed from the direction B of Figure 3 in Comparative Example 6.
[FIG. 6A] An observation photograph of the cutting edge portion 3 after cutting as viewed from the direction A of Figure 2 in Comparative Example 7.
[FIG. 6B] An observation photograph of the cutting edge portion 3 after cutting as viewed from the direction B of Figure 3 in Comparative Example 7.
[FIG. 7] A graph illustrating a tool diameter correction amount with respect to the number of machined threads.

### DESCRIPTION OF EMBODIMENTS

Hereinafter, an embodiment of the present invention will be described with reference to the drawings.

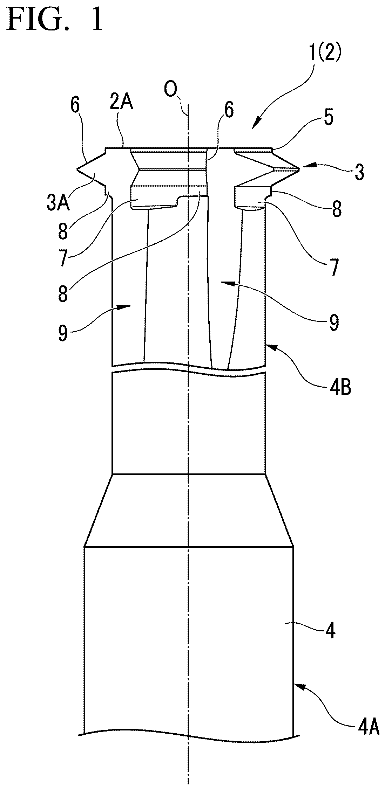

As illustrated in Figure 1, a threading cutter 1 of the embodiment has a rod-shaped cutter body 2 which rotates around an axis O and a cutting edge portion 3 which is located at the tip of the cutter body 2. The threading cutter 1 has a hard coating that covers at least the surface of the cutting edge portion 3. The cutter body 2 has a substantially columnar shape. In this specification, the central axis of the column that is the outer shape of the cutter body 2 is defined as the axis O. Further, the side of the cutter body 2 on which the cutting edge portion 3 is formed is referred to as the tip side, and the side opposite to the side on which the cutting edge portion 3 is formed (the side on which a shank portion 4 is formed) is referred to as the rear side.

The cutter body 2 has the cutting edge portion 3, the shank portion 4, and a column portion 5. The cutting edge portion 3, the shank portion 4, and the column portion 5 that constitute the cutter body 2 are integrally formed from, for example, a WC-Co cemented carbide. That is, the base material of the cutting edge portion 3 is a WC-Co cemented carbide. The Co content of the WC-Co cemented carbide is preferably 5 to 10 mass %. Furthermore, the Co content of the WC-Co cemented carbide is preferably 7 to 9 mass %. The hardness of the WC-Co cemented carbide is preferably HRA 93.5 to 94.5. Although not particularly limited, the hardness of the WC-Co cemented carbide may be HRA 93.6 to 94.4, or may be HRA 93.7 to 94.3. Furthermore, the base material of the cutting edge portion 3 may be a metal material other than the WC-Co cemented carbide.

The threading cutter 1 is attached with the shank portion 4 held by the spindle of the machine tool. The threading cutter 1 is driven to rotate around the axis O, and is driven to revolve around another axis parallel to the axis O relative to the work material, thereby performing helical feed. At this time, the cutting edge portion 3 cuts an inner wall surface of a pilot hole formed in advance in the work material, thereby forming a female thread on the inner peripheral surface of the pilot hole.

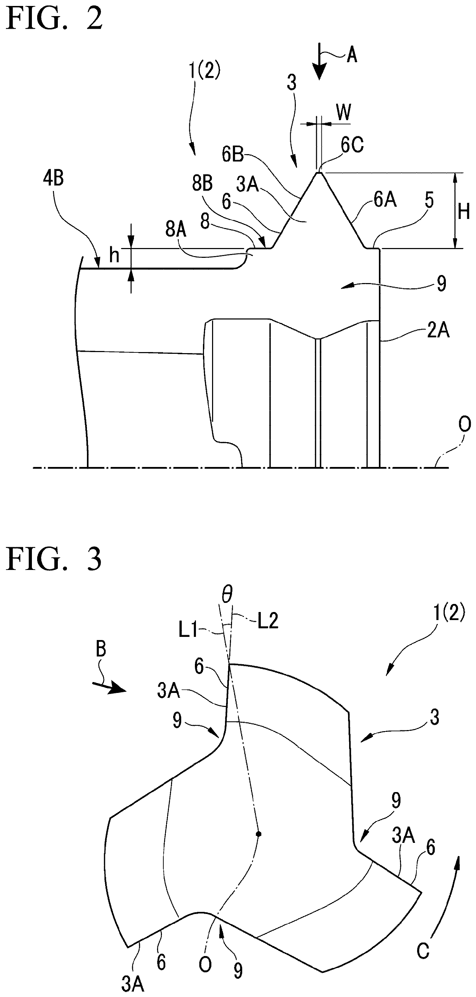

The cutting edge portion 3 has a plurality of threading edges 6 which protrude toward the outer peripheral side of the cutter body 2. In this embodiment, as illustrated in Figure 3, the cutting edge portion 3 has three threading edges 6. Furthermore, the cutting edge portion 3 may have, for example, four threading edges 6, and the number of the threading edges 6 is not limited. In Figure 3, the rotation direction of the cutter body is indicated by the arrow C. The plurality of threading edges 6 are arranged side by side in the circumferential direction of the cutter body 2. A chip discharge groove 9 is provided between two adjacent threading edges 6. The threading cutter 1 has three chip discharge grooves 9 which extend along the axis O on the outer peripheral surface of the cutter body 2.

On the other hand, as illustrated in Figure 1, the plurality of threading edges 6 are not arranged side by side in a plurality of rows in the direction of the axis O of the cutter body 2, but are provided in only one row. That is, the axial positions of three threading edges 6 are aligned with one another.

In the cutting edge portion 3, the surface of the base material made of WC-Co cemented carbide is coated with an AlCrN-based hard coating. The AlCrN-based hard coating is preferred due to good wear resistance for a wide range of work materials. Furthermore, in the content ratio of metal elements including metalloids in the AlCrN-based hard coating, Al is the largest, and the total content ratio of Al and Cr is preferably 90 atomic % or more. Furthermore, the coating material may be a hard coating other than the AlCrN-based hard coating.

As illustrated in Figure 2, a threading edge 6 has a trapezoidal shape as viewed from a direction perpendicular to a rake face 3A. The threading edge 6 has a leading edge 6A which is located on the tip side of the cutter body 2 in the direction of the axis O, a trailing edge 6B which is located on the rear end side in the direction of the axis O, and an outer peripheral edge 6C which faces radially outward of the cutter body 2. Furthermore, the "leading edge" and the "trailing edge" are simple names used to distinguish a plurality of cutting edges, and are not intended to specify the use pattern of the thread cutter 1.

The width of the outer peripheral edge 6C in the direction of the axis O parallel to the direction of the axis O is defined as the crest flat width W of the threading edge 6. The radial length from the base ends of the leading edge 6A and the trailing edge 6B to the outer peripheral edge 6C is defined as the thread height H of the threading edge 6. The ratio W/H between the crest flat width W and the thread height H satisfies a relationship of 3%≤W/H≤10% and further a relationship of 5%W/H≤10%. The thread height H of the threading edge 6 corresponds to the depth of the root of the female thread formed in the work material using the threading cutter 1. In this embodiment, in Figure 2, the thread height H is displayed as the protrusion height from the outer peripheral surface of the column portion 5 of the threading edge 6, but the thread height H is determined based on the effective edge length range of the leading edge 6A and the trailing edge 6B.

As illustrated in Figure 3, when the cutter body 2 is viewed from the tip side along the axis O in a plan view, the angle θ (radial rake angle) formed by the straight line L1 connecting the vertex on the front side of the rotation direction C of the threading edge 6 to the axis O and the extension line L2 of the rake face 3A of the cutting edge portion 3 facing forward in the tool rotation direction C is defined as the rake angle θ. The rake angle θ is positive when the extension line L2 is located ahead of the straight line L1 in the rotation direction C, and is negative when the extension line L2 is located behind the straight line L1 in the rotation direction C. In the threading cutter 1 of this embodiment, the rake angle θ of the threading edge 6 is negative and satisfies a relationship of -20°≤θ≤-5°.

As illustrated in Figure 1, the shank portion 4 has a columnar shape centered on the axis O. The shank portion 4 is provided on the rear end side of the cutting edge portion 3 in the cutter body 2 to be integrated with the cutting edge portion 3. **In** an area adjacent to the rear end side of the threading edge 6, a recess 7 recessed radially inward from the outer peripheral surface of the shank portion 4 and a protrusion 8 continuing to the recess 7 on the front side in the tool rotation direction C and protruding radially outward from the outer surface of the shank portion 4 are provided. As illustrated in Figure 2, the protrusion 8 has an end surface 8A which is provided at the end on the front side in the tool rotation direction C to be located inside the chip discharge groove 9. The radial position of the radially outer edge of the end surface 8A is aligned to the radial position of the outer peripheral surface of the column portion 5. Furthermore, the column portion 5 may not be provided.

The protrusion 8 may be provided between the shank portion 4 and the cutting edge portion 3. By providing the protrusion 8 between the shank portion 4 and the cutting edge portion 3, the thread height H of the cutting edge portion 3 can be suppressed from becoming too high. As a result, the cutting edge strength of the cutting edge portion 3 is improved, and chipping can be suppressed.

The shank portion 4 has a gripping portion 4A which is a chucking portion at the rearmost end side and a neck portion 4B which is provided between the cutting edge portion 3 and the gripping portion 4A. The neck portion 4B has a diameter smaller than or equal to the diameter of the gripping portion 4A.

As illustrated in Figure 2, when the difference between the diameter of the threading cutter 1 at the outer surface 8B of the protrusion 8 and the diameter of the threading cutter 1 at the neck portion 4B is defined as a clearance h, the clearance h relative to the thread height H is preferably 5%h/H≤20% and more preferably 8%h/H≤18%.

By providing the clearance h between the outer surface 8B of the protrusion 8 and the neck portion 4B, interference between the shank portion 4 and the machined hole is avoided even when deflection occurs during machining, and hence it becomes easier to continue stable cutting. Since the threading cutter of the present invention has a relatively high thread height H, deflection may occur during machining. By providing the clearance h, interference during machining can be made less likely to occur. However, if the clearance h is made too large, the rigidity of the tool itself will decrease.

Therefore, in order to avoid interference between the shank portion 4 and the machined hole and to avoid a decrease in the rigidity of the tool, it is preferable that the range of h/H is 5%≤h/H≤20%. More preferably, the range is 8%≤h/H≤18%.

### (Design Example)

The present inventor has designed a threading cutter capable of machining female threads with a wide range of root widths and root depths, that is, a wide range of pitches. Table 1 illustrates an example of design values including the outer diameter and inner diameter of the cutting edge portion, the thread height (H) of the threading edge, the crest flat width (W), and W/H.

**[Table 1]**

| Example | Example 1 | Example 2 | Example 3 | Example 4 | Example 5 | Example 6 |
|---|---|---|---|---|---|---|
| Outer diameter (mm) | 1.5 | 1.9 | 2.4 | 3.2 | 4.0 | 4.5 |
| Inner di mater (mm) | 1.017 | 1.218 | 1.541 | 2.045 | 2.867 | 3.123 |
| Thread height H (mm) | 0.2415 | 0.341 | 0.4295 | 0.5775 | 0.5665 | 0.6885 |
| Crest flat width W (mm) | 0.021 | 0.026 | 0.026 | 0.034 | 0.042 | 0.042 |
| W/H(%) | 8.7 | 7.6 | 6.1 | 5.9 | 7.4 | 6.1 |

As illustrated in Table 1, in Examples 1 to 6, the ratio W/H of the crest flat width W to the thread height H of the threading edge was set to satisfy a relationship of 3%≤W/H≤10% and further a relationship of 5%≤W/H≤10%. By adjusting the machining conditions using these threading cutters, it is possible to machine female threads with a wide range of root widths and root depths, that is, a wide range of pitches.

For example, according to Example 1 of Table 1, M2 (pitch 0.25 mm, 0.4 mm) and M2.2 (pitch 0.25 mm, 0.45 mm) can be machined in the metric thread standards and No.2 UNF (pitch 0.397 mm) and No.2 UNC (pitch 0.454 mm) can be machined in the unified thread standards at least by adjusting the machining conditions.

Similarly, according to Example 2, M2.5 can be machined in the metric thread standards and No.3 UNF, No.3 UNC, No.4 UNF, and No.4 UNC can be machined in the unified thread standards at least by adjusting the machining conditions.

According to Example 3, M3 and M3.5 can be machined in the metric thread standards and No.5 UNF, No.5 UNC, No.6 UNF, and No.6 UNC can be machined in the unified thread standards at least by adjusting the machining conditions.

According to Example 4, M4 and M4.5 can be machined in the metric thread standards and No.8 UNF, No.8 UNC, No.10 UNF, and No.10 UNC can be machined in the unified thread standards at least by adjusting the machining conditions.

According to Example 5, M5 can be machined in the metric thread standards and NO. 12 UNF and NO. 12 UNC can be machined in the unified thread standards at least by adjusting the machining conditions.

According to Example 6, M5.5 and M6 can be machined in the metric thread standards and NO. 1/4 UNF and NO. 1/4 UNC can be machined in the unified thread standards at least by adjusting the machining conditions.

The threading cutters of Examples 1 to 6 can machine a wide range of root widths and root depths, that is, female threads with a wide range of pitches by adjusting the machining conditions.

Furthermore, the present inventor carried out machining of female threads using the threading cutters of the examples and comparative examples illustrated below, and evaluated the wear state of the threading edges after machining as well as the state of the machined surfaces. Hereinafter, the results will be described.

### (Evaluation 1)

In Evaluation 1, the machining of M3 female threads in Inconel 718 was evaluated using Example 3 of Table 1 and the commercially available threading cutters of Comparative Examples 1 and 2. The machining conditions are as follows.
Work Material: Inconel 718
Number of Machined Threads: 10
Rotation Speed: 4,000 rpm
Cutting Direction: Down Cut
Coolant: Emulsion
Tool Overhang: 16 mm
Feed per Tooth: 0.009 mm/tooth
Machine: BT30 vertical M/C

Table 2 illustrates the W/H, rake angle, and wear state of the threading edge after machining for Example 3, Comparative Example 1, and Comparative Example 2. Furthermore, regarding the rake angle in Table 2, a positive rake angle is indicated as positive, a negative rake angle of 0°>θ>-5° is indicated as weak negative, and a negative rake angle of -20°≤θ≤-5° is indicated as strong negative. The same applies to Tables 3 and 4 below.

**[Table 2]**

| | W/H(%) | Rake angle (°) | Wear state after machining |
|---|---|---|---|
| Example 3 | 6.1 | Strong negative (-10) | Small wear |
| Comparative example 1 | 6.7 | Weak negative (-2) | Large wear |
| Comparative example 2 | 10.6 | Positive (+5) | Large wear |

As illustrated in Table 2, as an observation result of the wear state of the threading edge after thread matching, it was found that the wear near the outer peripheral edge was relatively large in Comparative Examples 1 and 2 while the wear was relatively small in Example 3.

### (Evaluation 2)

In Evaluation 2, the machining of M6 female threads in a cobalt-chromium alloy was evaluated using Example 6 of Table 1 and commercially available threading cutters of Comparative Examples 3, 4, and 5. The machining conditions were as follows.
Work Material: Cobalt-Chromium Alloy
Number of Machined Threads: 50
Rotation Speed: 3,800 rpm
Cutting Direction: Down Cut
Coolant: Oil-Based Coolant
Tool Overhang: 21 mm
Feed per Tooth: 0.02 mm/tooth
Machine: HSK63 Vertical M/C

Table 3 illustrates the W/H, rake angle, and wear width of the threading edge after machining for Example 6, Comparative Example 3, Comparative Example 4, and Comparative Example 5.

**[Table 3]**

| | W/H(%) | Rake angle (°) | Wear width after machining (mm) |
|---|---|---|---|
| Example 6 | 6.1 | Strong negative (-10) | 0.009 |
| Comparative example 3 | 6.7 | Weak negative (-2) | 0.021 |
| Comparative example 4 | 19.1 | Positive (+5) | 0.026 |
| Comparative example 5 | 10.6 | Positive (+5) | 0.063 |

As illustrated in Table 3, the width of the worn portion near the outer peripheral edge of the threading edge after thread machining was measured. As a result, it was found that the wear width was large to be 0.02 mm or more in Comparative Examples 3, 4, and 5 while the wear width in Example 6 was small to be 0.009 mm.

### (Evaluation 3)

In Evaluation 3, the threading cutters of Example 6 in Table 1 and Comparative Examples 4 and 5 used in Evaluation 2 were used to evaluate the state of the machined surface after machining. The machining conditions were as follows.
Work material: Titanium alloy (Ti-6Al-4V)
Rotation Speed: 3,800 rpm
Cutting Direction: Down Cut
Coolant: Oil-Based Coolant
Tool Overhang: 21 mm
Feed per Tooth: 0.02 mm/tooth
Machine: HSK63 Vertical M/C

Table 4 illustrates the W/H, rake angle, and state of the machined surface after machining of Example 6, Comparative Example 4, and Comparative Example 5.

**[Table 4]**

| | W/H(%) | Rake angle (°) | State after machining |
|---|---|---|---|
| Example 2 | 6.1 | Strong negative (-10) | Good |
| Comparative example 4 | 19.1 | Positive (+5) | Presence of chattering surface |
| Comparative example 5 | 10.6 | Positive (+5) | Presence of chattering surface |

As illustrated in Table 4, as an observation result of the state of the machined surface after thread machining, it was found that a chattering surface was not formed to thereby obtain a good machined surface in Example 6 while a chattering surface was formed in Comparative Examples 4 and 5. Furthermore, the chattering surface is a machined surface that has irregularities caused by chatter vibrations of the tool.

As described above, in the threading cutter 1 of this embodiment, only one threading edge 6 is provided in the direction of the axis O of the cutter body 2. Further, since the threading edge 6 satisfies a relationship of 3%≤W/H≤10% and further a relationship of 5%W/H≤10%, it is possible to machine female threads with a wide range of root widths and root depths, that is, a wide range of pitches by appropriately adjusting the machining conditions.

In the threading cutter of this embodiment, since the threading edge 6 has a narrow crest flat width W and a high thread height H, there is concern that chipping resistance of the threading edge 6 is reduced, but since the rake angle θ of the threading edge 6 is strong negative to be -20°≤θ≤-5°, chipping resistance can be ensured. Further, since the load on the threading edge 6 can be reduced, the occurrence of the chattering surface can be suppressed, and a good machined surface can be formed. Accordingly, it is possible to provide the threading cutter 1 that can stably cut female threads having various specifications such as root width, root depth, and pitch for a long period of time.

Further, in this embodiment, the base material of the cutting edge portion 3 is a WC-Co cemented carbide, the Co content of the WC-Co cemented carbide is 5 to 10 mass%, and the hardness of the WC-Co cemented carbide is HRA93.5 to 94.5. By using such a high hardness base material, the chipping resistance of the threading edge 6 can be increased, the occurrence of chattering surfaces can be suppressed, and a threading cutter with a long life and excellent machining quality can be obtained.

Further, in this embodiment, the cutting edge portion 3 has an AlCrN-based hard coating. Accordingly, good wear resistance can be achieved when machining many types of work materials.

Further, in this embodiment, the cutter body 2 has the column portion 5 between a tip surface 2A of the cutter body 2 and the cutting edge portion 3. According to this configuration, the area of the leading edge 6A is equal to the area of the trailing edge 6B. Accordingly, since an excessive load applied to one of the leading edge 6A and the trailing edge 6B is suppressed, the life of the threading edge 6 can be ensured.

### (Evaluation 4)

In Evaluation 4, as illustrated in Table 5, threading cutters with different rake angles were used, and the state of the cutting edge portions 3 of the threading cutters after machining was evaluated. Furthermore, Comparative Examples 6 and 7 have the same specifications as Example 3 except for the rake angle.

The base material is a WC-Co cemented carbide with a Co content of 8 mass % and an HRA of 93.8, and an AlCrN-based hard coating is provided on the surface.

The machining conditions were as follows.
Work Material: Stainless Steel (SUS304)
Cutting Direction: Down Cut
Coolant: Water-soluble Coolant
Tool Overhang: 18 mm
Feed per Tooth: 0.028 mm/tooth
Machine: BT40 vertical M/C

The rotation speed was increased in stages: 7,290 rpm for drilling 1 to 20 holes, 8,620 rpm for drilling 21 to 25 holes, 9,950 rpm for drilling 26 to 30 holes, 11,280 rpm for drilling 31 to 45 holes, and 13,270 rpm for drilling 46 to 50 holes.

**[Table 5]**

| | W/H(%) | Rake angle (°) |
|---|---|---|
| Example 3 | 6.1 | Strong negative (-10) |
| Comparative example 6 | 6.1 | Weak negative (-2) |
| Comparative example 7 | 6.1 | Positive (+5) |

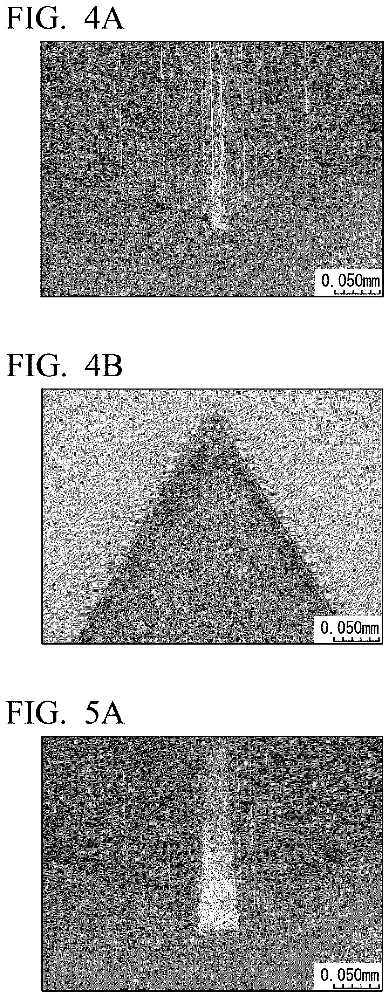

In all cases, no chipping occurred to the thread cutting edge until 45 holes were drilled, but after 50 holes were drilled, chipping occurred in Comparative Examples 6 and 7. Observation photographs of the cutting edge portion 3 of Example 3, Comparative Example 6, and Comparative Example 7 after drilling 50 holes as viewed from the direction A in Figure 2 are illustrated in Figures 4A, 5A, and 6A, respectively. Further, observation photographs of the cutting edge portion 3 (rake face) of Example 3, Comparative Example 6, and Comparative Example 7 after drilling 50 holes as viewed from the direction B in Figure 3 are illustrated in Figures 4B, 5B and 6B, respectively.

In Example 3, as illustrated in Figures 4A and 4B, no significant chipping was found even after drilling 50 holes, and continuous drilling was possible.

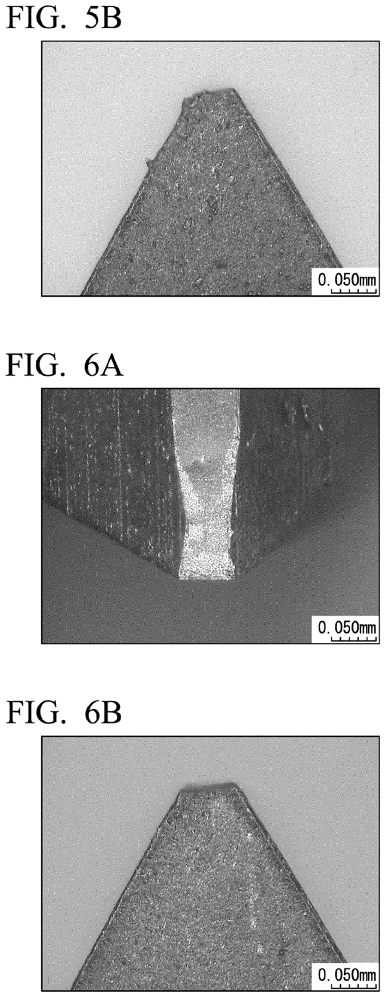

On the other hand, in Comparative Example 6, as illustrated in Figures 5A and 5B, chipping of the cutting edge was found after drilling 50 holes. Particularly, in Figure 5B, the cutting edge was no longer able to maintain the thread shape, and further cutting was no longer possible.

In Comparative Example 7, as in Comparative Example 6, chipping of the cutting edge was found after drilling 50 holes as illustrated in Figures 6A and 6B. Particularly, in Figure 6B, the cutting edge was no longer able to maintain the thread shape, and further cutting was no longer possible.

The threading cutter used in Evaluation 4 has the same shape except for the rake angle. In particular, since the W/H is 6.1%, the crest width is relatively narrow and the thread height is relatively high, so that the durability of the cutting edge tends to be small. Therefore, the durability of the cutting edge was insufficient when the rake angle was weakly negative (Comparative Example 6, Figures 5A and 5B) and when the rake angle was positive (Comparative Example 7, Figures 6A and 6B). As a result, the cutting edge was chipped after drilling 46 to 50 holes, which was under more severe cutting conditions.

On the other hand, in Example 3, since the rake angle was strongly negative, the load on the threading edge could be reduced and durability could be ensured. Therefore, the cutting edge was not chipped even after drilling 46 to 50 holes under more severe cutting conditions.

From the above, it was found that Example 3 can stably machine female threads for various uses compared to Comparative Examples 6 and 7.

### (Evaluation 5)

In Evaluation 5, the rake angle was standardized to -10° as illustrated in Table 6, and the tool diameter correction amount during machining and tool life (outer peripheral edge wear amount) were evaluated using tools with different WC-Co cemented carbide base materials. Both have an AlCrN-based hard coating on the surface. Furthermore, Examples 7 and 8 have the same specifications as Example 3 except for the base material.
Work Material: Pre-hardened Steel (NAK80)
Rotation Speed: 7,290 rpm
Cutting Direction: Down Cut
Coolant: Water-soluble Coolant
Tool Overhang: 18 mm
Feed per Tooth: 0.03 mm/tooth
Machine: BT30 vertical M/C

**[Table 6]**

| | W/H(%) | Rake angle (°) | Co content of base material (mass%) | Hardness of base material (HRA) |
|---|---|---|---|---|
| Example 3 | 6.1 | Strong negative (-10) | 8 | 93.8 |
| Example 7 | 6.1 | Strong negative (-10) | 8 | 93.4 |
| Example 8 | 6.1 | Strong negative (-10) | 11 | 92.5 |

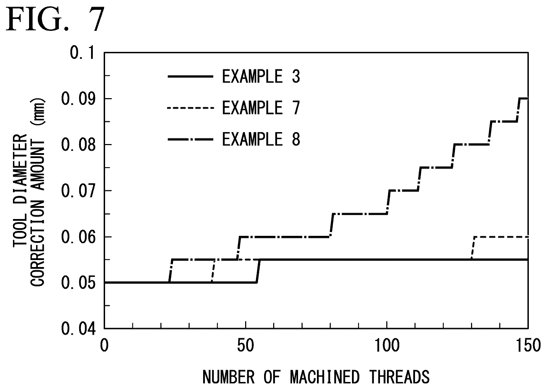

The change in the tool diameter correction amount with respect to the number of drilled holes in Examples 3, 7, and 8 is illustrated in Figure 7. In Figure 7, the solid line indicates Example 3, the dashed line indicates Example 7, and the dashed line indicates Example 8.

Furthermore, the tool diameter correction amount is a value used to maintain thread precision by inspecting the thread diameter reduction caused by tool wear and tool deflection due to cutting resistance with a thread gauge and appropriately correcting the tool diameter according to the reduction. That is, when the tool diameter correction amount is small and the number of corrections is small, thread accuracy can be maintained for a long period of time. Accordingly, it is possible to determine that the tool life is excellent.

In all of Examples 3, 7, and 8, the cutting edge was not chipped even after drilling 150 holes, and continuous drilling was possible. However, it can be seen from Figure 7 that the tool diameter correction amount in Example 8 is larger than that in Examples 3 and 7. In particular, after 100 holes have been drilled, the tool diameter correction amount changes dramatically. On the other hand, in Example 3, the tool diameter correction amount after drilling 50 holes was 0.050 mm, the tool diameter correction amount after drilling 100 holes was 0.055 mm, and the tool diameter correction amount after drilling 150 holes was 0.055 mm, so the change in the tool diameter correction amount was gradual. Even in Example 7, the change in the tool diameter correction amount is gradual as in Example 3. However, in Example 7, the tool diameter correction amount becomes larger than 0.050 mm with a smaller number of machined screws compared to Example 3. In addition, in Example 7, the tool diameter correction amount after drilling 150 holes was 0.060 mm, which is larger than that of Example 3.

Furthermore, the number of corrections was one in Example 3, two in Example 7, and eight in Example 8. That is, the number of corrections was more in Examples 7 and 8 than in Example 3.

In all examples, the average value of the maximum wear width of the three edges after drilling 150 holes was 0.074 mm in Example 3, 0.080 mm in Example 7, and 0.085 mm in Example 8. In all examples, the wear width was small to be less than 0.1 mm. Particularly, in Example 3, since the wear width was reduced and tool damage was smaller, it can be said that the tool diameter correction amount and the number of corrections could be reduced.

From Evaluations 4 and 5, it was found that chipping resistance could be ensured by making the rake angle strongly negative, and that the use of the high-hardness base material provided good wear resistance and reduced the tool diameter correction amount. Therefore, the present invention can provide a threading cutter capable of stably forming female threads having various specifications over a long period of time.

Furthermore, the technical scope of the present invention is not limited to the above-described embodiment, and various modifications can be made without departing from the spirit of the present invention. Further, the present invention is not limited to the above-described embodiment.

For example, in the above-described embodiment, although an example of the solid type threading cutter in which the shank portion and cutting edge portion are formed from a single base material has been given, the present invention can also be applied to other types of threading cutters, such as an insert type and a head exchange type.

### INDUSTRIAL APPLICABILITY

According to the present invention, it is possible to provide a threading cutter capable of stably forming female threads having various specifications.

### REFERENCE SIGNS LIST

1 Threading cutter
2 Cutter body
3 Cutting edge portion
4 Shank portion
4A Gripping portion
4B Neck portion
5 Column portion
6 Cutting edge
8 Protrusion
8B Outer surface of protrusion 8
O Axis
W Crest flat width
H Thread height
h Clearance

## Claims

1. A threading cutter comprising:
a cutter body which rotates around an axis; and
a cutting edge portion which is formed at a tip of the cutter body,
wherein the cutting edge portion has a plurality of threading edges which protrude radially outward on an outer peripheral surface of the cutter body,
wherein the plurality of threading edges are arranged side by side in a circumferential direction of the cutter body and are aligned in an axial direction,
wherein in a case where a crest flat width of the threading edge is indicated by W and a thread height of the threading edge is indicated by H, a relationship of 3%≤W/H≤10% is satisfied, and
wherein in a case where a rake angle of the threading edge is indicated by θ, a relationship of -20°≤θ≤-5° is satisfied.

2. The threading cutter according to claim 1,
wherein the crest flat width W and the thread height H satisfy a relationship of 5%≤W/H≤10%.

3. The threading cutter according to claim 1 or 2,
wherein a base material of the cutting edge portion is a WC-Co cemented carbide,
wherein a Co content of the WC-Co cemented carbide is 5 to 10 mass%, and
wherein a hardness of the WC-Co cemented carbide is HRA93.5 to 94.5.

4. The threading cutter according to claim 1 or 2,
wherein the cutting edge portion has an AlCrN-based hard coating.

5. The threading cutter according to claim 1 or 2,
wherein the threading cutter has a shank portion provided on a rear end side of the cutting edge portion in the cutter body to be integrated with the cutting edge portion, and
wherein the threading cutter further comprises a protrusion which protrudes radially outward from an outer surface of the shank portion.

6. The threading cutter according to claim 5,
wherein the shank portion has a gripping portion which is a chucking portion on a rear end side of a tool and a neck portion which is provided between the cutting edge portion and the gripping portion to have a diameter smaller than or equal to a diameter of the gripping portion, and
wherein a clearance h between an outer surface of the protrusion and the neck portion with respect to the thread height H satisfies 5%≤h/H≤20%.
